# EUROPEAN PATENT APPLICATION

(11) **EP 0 976 313 A2**
(43) Date of publication of application: **02.02.2000**
(21) Application number: 99204032.9
(22) Date of filing: 23.12.1993
(51) Int. Cl.: A01D 34/00

(54) **Device for trimming grass**

(30) Priority: 23.12.1992 NL 9202252; 16.08.1993 NL 9301416
(62) Divisional of application: 93203656.9
(71) Applicant: SKIL EUROPE B.V., NL-4825 BD Breda (NL)
(72) Inventor: Jung, Boudewijn Casper, 4621 BJ Bergen op Zoom (NL); Van Rijen, Johannes Gerardus, 4841 RN Prinsenbeek (NL); Houben, Jan Peter, 2382 Poppel (BE)
(74) Representative: Hoorweg, Petrus Nicolaas

(57) **Abstract**

A device for trimming vegetation, such as grass and the like, comprising a motor housing, a motor mounted therein, said motor having a motor shaft and a reel carried by the shaft for a line, the end part of which is unwound and cut off over a pre-determined length and rotated about the motor shaft in an active plane perpendicular to the motor shaft; and a handle having a handgrip and a shank connected to the motor housing, wherein the shank is connected to the motor housing through a universal joint in order to enable an angular positioning relative to the motor shaft and a rotation of the shank about the longitudinal axis thereof.

## Description

The invention relates to a device for trimming vegetation, such as grass and the like, comprising a motor housing, a motor mounted therein, said motor having a motor shaft and a reel carried by the shaft for a line, the end part of which is unwound and cut off over a pre-determined length and rotated about the motor shaft in an active plane perpendicular to the motor shaft; and a handle having a handgrip and a shank connected to the motor housing.

Such devices can be used in two main positions, namely that wherein the end of the line is swung around in a practically horizontal plane and that wherein the end of the line is swung around in a practically vertical plane. For easy handling of the device the handle must therefore be adjusted relative to the housing and the support of the device on the ground must likewise be adapted.

The invention has for its object to improve the adjustment of the handle relative to the housing.

The device according to the invention is distinguished in that the shank is connected to the motor housing through a universal joint in order to enable an angular positioning relative to the motor shaft and a rotation of the shank about the longitudinal axis thereof.

Above mentioned and other features of the invention will be elucidated further in the figure description of a number of embodiments hereinbelow.

In the drawing:
figure 1 shows a perspective top view of a line trimmer according to the invention, wherein several protective parts have been broken away for clarification;
figure 2 shows a standing section through the motor shaft of the device of figure 1;
figures 3a and 3b show in each case a side view of a device in the respective main positions of use thereof;
figure 4 shows a perspective view of an embodiment according to the invention wherein the shank of the handle is connected to the motor housing for pivoting in all directions;
figure 5 shows a standing view, partially with broken away parts, of the embodiment of figure 4;
figure 6 is a perspective view of the embodiment of figure 4 with exploded parts.

Designated in the figures with the numeral 1 is the motor housing, in which an electric motor 2 is accommodated.

On the underside of housing 1 a motor shaft 3 protrudes downward, on which motor shaft is arranged a reel 4 for a trimming line 5. The trimming line 5 is wound onto the reel and protected in a reel housing 6, which housing is provided with a passage opening 7 for guiding through the active end part of line 5. Housing 6 is closed off on the underside by a press-in cover 9 which can support on the ground. By pressing in a cover 9, a determined length of line 5 is released each time and cut to length in order to enable cutting of the grass.

When the wire end 5 swings round the shaft 3, this wire end will follow a determined circular path, which path forms an active plane that extends perpendicularly of the shaft 3.

The housing 1 is further provided with a handle 10 which is embodied with a shank 11 which is connected to a part of the housing 1 via a ball joint 12. A second handle 13 can be arranged halfway along the shank. The shank and handle 10, 11 can be set in various ways, which is further elucidated below.

On the side of housing 1 lying towards the handle 10 the active plane through which the line 5 is moved is protected on the top side by a cover plate 15. This cover plate serves as protection against grass, small stones, sand or wire portions being thrown around which can be dangerous for the user and his surroundings. The cover plate 15 only covers a sector angle of the complete circle around the bottom end of the housing, so that the wire remains fully visible on the side of the housing 1 remote from the user. This serves for observation of the work.

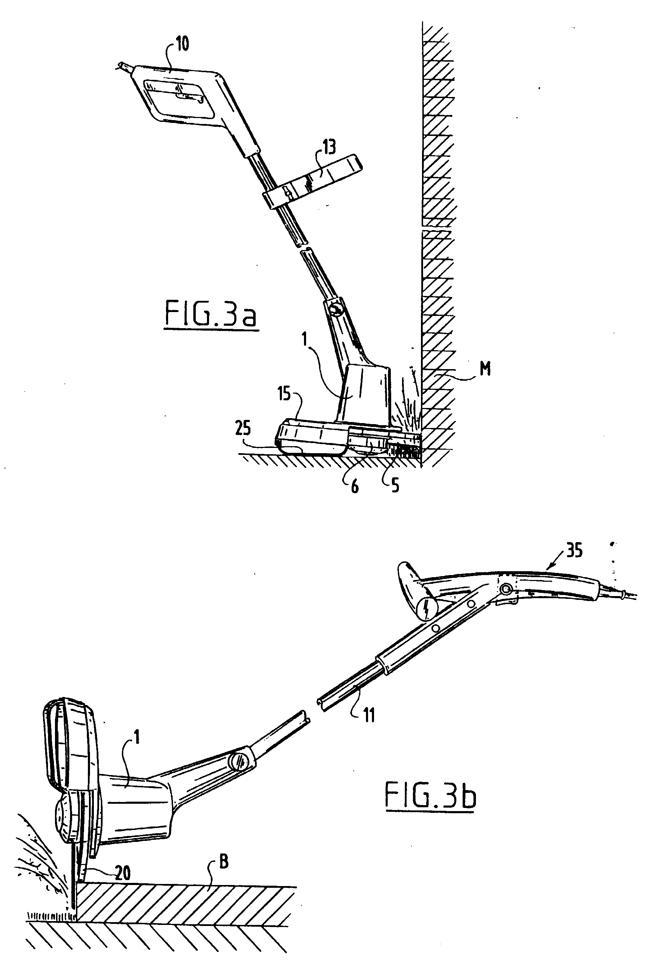

Because the machine is used in two positions, as shown in figures 3a and 3b, the wire end part 5 can come too close to obstacles, as indicated in figure 3a by a wall M. In order to prevent housing 1 and therefore wire end part 5 approaching too close to the wall M, the invention proposes arrangement of a bounding element 20.

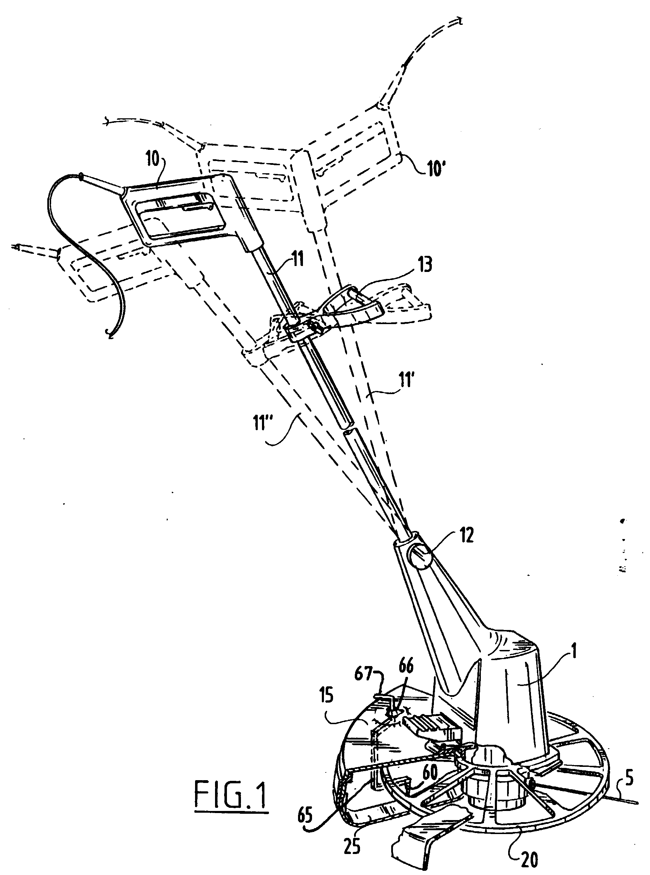

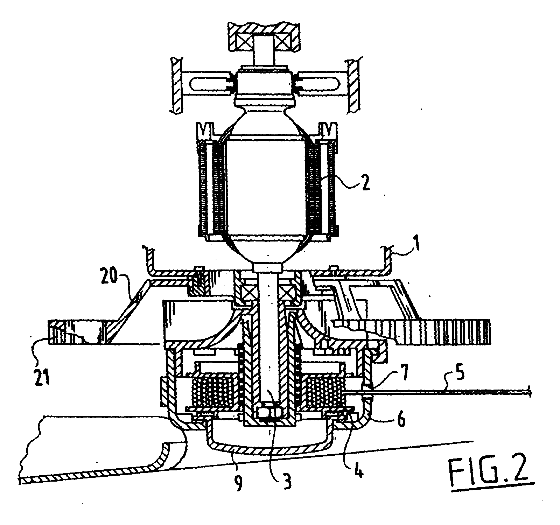

In the first embodiment according to figures 1 to 3 the bounding element 20 is embodied as a spoke wheel mounted concentrically round the motor shaft 3 on the underside of housing 1. Figure 2 shows that the spoke wheel can be slightly cup-shaped in order to place the peripheral edge 21 close to the active plane of the wire end 5.

The bounding wheel 20 is freely rotatable so that, see figure 3a, housing 1 respectively reel housing 6 cannot come too close to the wall M. The wire end part 5 is therefore bent through a wider angle whereby wire breakage is avoided.

In the position according to figure 3b, the bounding element 20 is used as roller wheel, wherein the periphery 21, whether or not provided with a profile, rolls over the ground surface B. Due to the comparatively large wheel periphery, that is, the relatively large radius of curvature, operation of the device in this position is also considerably facilitated as support.

The apparatus further comprises a handle 10 which is fixed to the shank 11. In the embodiment shown the shank 11 is accommodated via a universal joint 12 in the line of motor housing 1. The universal joint 12 makes it possible to rotate the shank 11 through 180° round the longitudinal axis thereof, for example into the position designated 10' in figure 1. The auxiliary handle 13 which is likewise fixed to shank 11 can therein also be rotated through 180° to obtain the correct adjustment for both the hands of the user.

The universal joint 12 further enables a different angular position of shank 11 relative to housing 1, which is indicated by the positions 11' and 11''.

Owing to these adjustment possibilities the shank with handles 10 and 13 can be placed into an optimal position relative to the housing, suitable for adjusting the device as comfortably as possible for the user in the various operational positions according to for instance figures 3a and 3b.

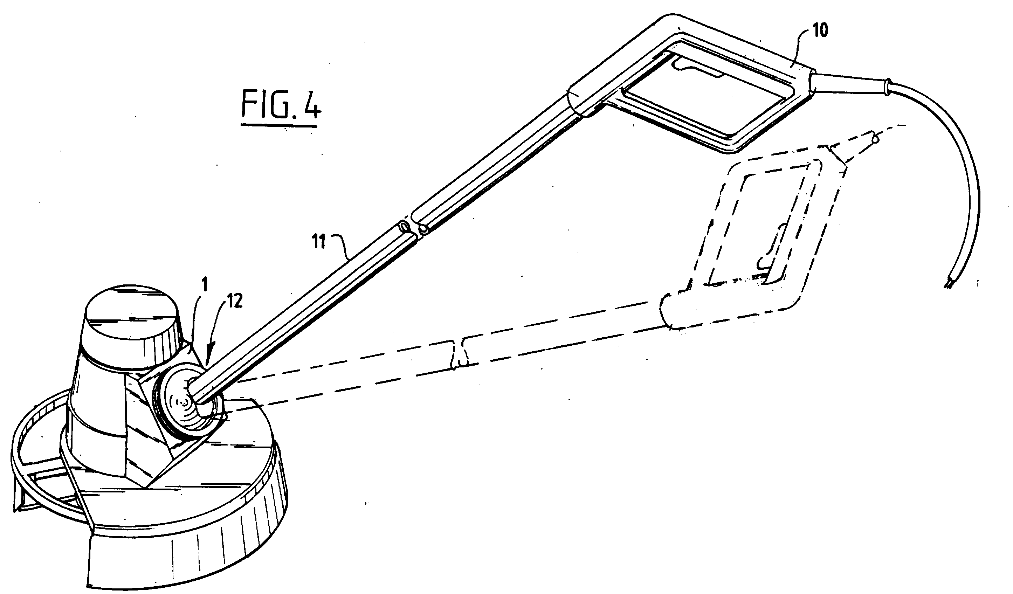

In figures 4 to 6 the universal joint between the shank 11 of the handle and the motor housing 1 is elucidated further.

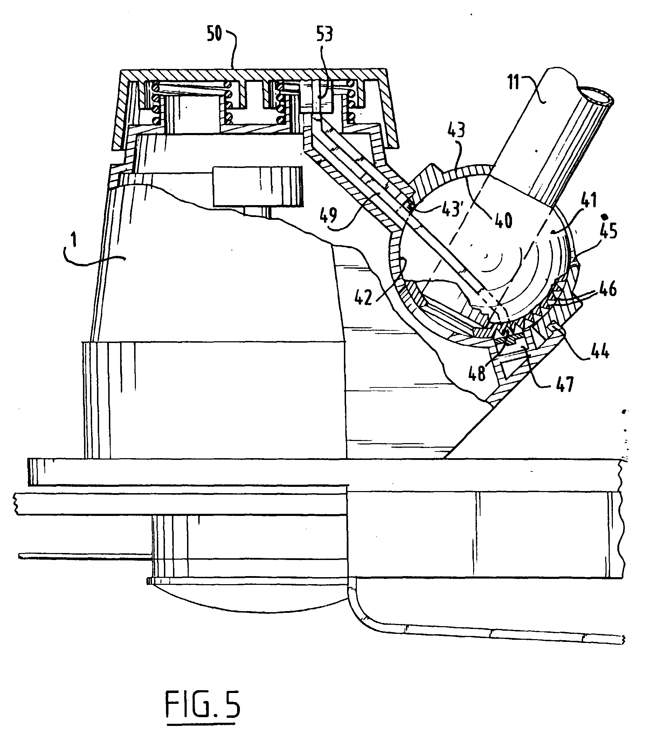

This universal joint, designated as a whole by 12, comprises a spherical chamber 40 connected to motor housing 1 and a spherical body 41 connected to shank 11. The periphery of the sphere 41 fits closely in the inside space of spherical chamber 40, which in figure 5 is formed by a spherically recessed portion 42 of the rear wall of housing 1, which is closed off on the top side by a semi-spherical cover 43. The latter is fixed by means of a groove 44 into which protrudes an edge of motor housing 1, which cover 43 has a slot-like opening 45 on the side facing the shank 11.

It will be apparent that due to the chosen spherical form between shank 11 and housing 1, the shank 11 can not only be placed into a position as according to figure 4 with full lines, but also into a position shown with broken lines, wherein the shank 11 can be adjusted as to angle relative to the motor shaft in motor housing 1 due to the slot-like opening 45 in cover 43. The ends of the slot-like openings serve as a stop to bound this rotation.

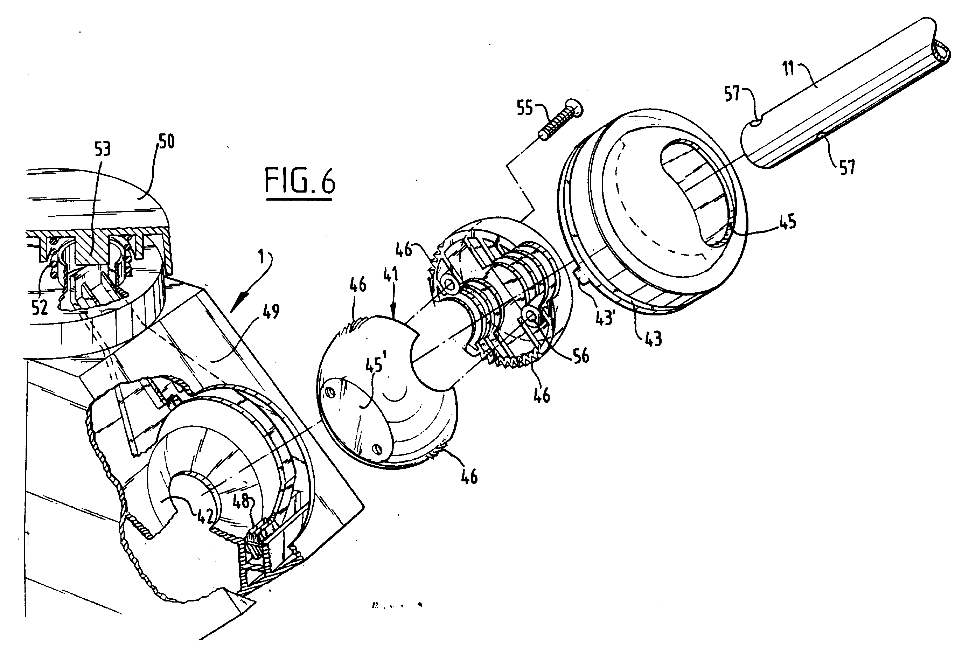

In order to enable blocking of the height adjustment of the shank, it is recommended to embody the spherical body 41 with a number of straight grooves 46, which extend parallel to the centre line of the sphere perpendicular to the centre line of shank 11, wherein a part of the chamber wall 42 is interrupted, which interruption connects onto a guiding 47 for receiving a locking member 48 provided with straight ribs which co-act with the grooves 46 of the spherical body 41. The locking member 48, also see figure 6, is connected round the chamber 42 to a plate-like actuating member 49 which leads to the top of motor housing 1. Arranged on motor housing 1 is a cap-like foot pedal 50 which is supported by protrusions 51 arranged on housing 1 around which pressure springs 52 are arranged. The pressure springs provide an upward directed force on the underside of the foot pedal 50. The latter is embodied with a ridge-like protrusion 53 which co-acts with the top end of the actuating plate 49.

By exerting a downward force with the foot on the foot pedal 50, the foot pedal 50 is pressed downward counter to the action of springs 52 and plate-like element 49 is thus likewise pressed downward, which in turn presses the blocking member 48 down into guide 47. The ribs thereof come thereby to lie free of the ribs 46 on the spherical body, whereby the spherical body can be rotated relative to the spherical chamber. When foot pedal 50 is released the springs 52 will press it upward taking with it the plate 49 and the locking member 48 whereby the ribs 46, and thereby the spherical body 41, are locked in the then adjusted position. The spherical shape also enables rotation of shank 11 round its lengthwise axis, whereby the handle 10 can be turned through at least 180 degrees, also see figure 4. This rotation causes a second group of grooves 46' diametrically opposite the first group to come into engagement with the ribs of the locking member 48.

The cover 43 rotates with the sphere 41 due to two flat surfaces 45' which lie against flat surfaces in cover 43, wherein a ridge 43' defines the end positions which preferably correspond with those as shown in figure 4, that is, that in the one end position handle 10 points downward relative to shank 11 and in the other end position upward, whereby the machine can be used in the operational position of figure 4, that is, the rotation shaft of the motor stands vertically, and in the operational position according to figure 3b wherein the rotation shaft of the motor is oriented horizontally.

It is noted finally that the fixing of the spherical body 41 to the bottom end of shank 11 can take place by embodying this spherical body 41 in two parts, which can be mutually fastened by means of screws 55, wherein the screw sleeves 56 in the sphere halves 41 fall into recesses 57 in the bottom end of shank 11, whereby shank 11 is connected non-slidably and non-rotatably in the spherical body 41.

It is noted that in figure 3b a single elongate handle 35 is used, which is fixed about halfway along the shank 11. On the side facing the machine housing the handle has a hammer-shaped end. This handle can also be placed into the desired position for use relative to the motor housing by means of the rotatable and pivotable shank 11. The advantage of this design is that the user is automatically forced to adjust the correct position, which enhances the work result.

The invention is not limited to the above described embodiments.

## Claims

1. Device for trimming vegetation, such as grass and the like, comprising a motor housing, a motor mounted therein, said motor having a motor shaft and a reel carried by the shaft for a line, the end part of which is unwound and cut off over a pre-determined length and rotated about the motor shaft in an active plane perpendicular to the motor shaft; and a handle having a handgrip and a shank connected to the motor housing, **characterized in that** the shank is connected to the motor housing through a universal joint in order to enable an angular positioning relative to the motor shaft and a rotation of the shank about the longitudinal axis thereof.

2. Device as claimed in claim 1, **characterized in that** the universal joint is provided with two stop members for bounding the rotation of the shank in two extreme positions.

3. Device as claimed in claims 1 and 2, **characterized in that** the universal joint is formed by a spherical chamber forming part of the motor housing and a spherical body fitting into the chamber and fixed to the shank respectively.

4. Device as claimed in claim 3, **characterized in that** the spherical surface of the spherical body is provided with one or more straight grooves, extending parallel to the centre line of the sphere perpendicular to the longitudinal axis of the shank and co-acting with the rib-like protrusions arranged in the chamber.

5. Device as claimed in claim 4, **characterized in that** the rib-like protrusions of the chamber are arranged for retraction therefrom.

6. Device as claimed in any of the previous claims, **characterized in that** the handle has an elongate form, wherein one end is shaped as a hammer.

7. Device as claimed in any of the previous claims, **characterized in that** a bounding element defining a curved outer periphery is arranged on the side of the housing remote from the handle and inbetween said cover plate and said plane and extending, as seen in the axial direction of the motor shaft, not further than the circle covered by the line, the bounding element being one or more wheels (20, 31).
